# FASCICULE DE BREVET EUROPEEN

(11) **EP 0 620 625 B1**
(45) Date de publication et mention de la délivrance du brevet: **26.08.1998**
(21) Numéro de dépôt: 94410021.3
(22) Date de dépôt: 06.04.1994
(51) Int. Cl.: H02B 11/127

(54) **Châssis de débrochage pour un disjoncteur**
Trenngestell für einen Leistungsschalter
Draw-out framework for a circuit breaker

(30) Priorité: 16.04.1993 FR 9304854
(43) Date de publication de la demande: 19.10.1994
(73) Titulaire: SCHNEIDER ELECTRIC SA, 92100 Boulogne Billancourt (FR)
(72) Inventeur: Bur, Marc, F-38050 Grenoble Cedex 09 (FR); Perriere, Alain, F-38050 Grenoble Cedex 09 (FR)
(74) Mandataire: Hecké, Gérard

(56) Documents cités:
- EP-A- 0 461 440
- DE-A- 2 103 210
- DE-A- 3 117 495
- DE-U- 7 630 684
- FR-A- 1 148 565
- FR-A- 1 218 076
- GB-A- 940 941
- US-A- 3 343 042

## Description

La présente invention concerne un châssis de débrochage pour un disjoncteur, ce disjoncteur étant agencé pour être maintenu dans une première position dans laquelle il est embroché sur un socle de raccordement ou dans une seconde position dans laquelle il est débroché de ce socle, ce châssis comportant deux flasques fixes solidaires du socle de raccordement, et un support portant le disjoncteur et agencé pour coopérer avec lesdits flasques fixes pour maintenir le disjoncteur dans la première ou la seconde position, lesdits moyens de guidage comportant au moins deux axes d'entraînement solidaires des flasques mobiles, et respectivement engagés dans deux gorges de guidage ménagées dans les deux flasques fixes.

On connaît déjà des châssis de débrochage pour des appareils électriques destinés à permettre la déconnexion des fiches de cet appareil des tulipes du socle de raccordement. Ces châssis sont habituellement adaptés au nombre de pôles de l'appareil concerné et ne peuvent pas être utilisés de façon universelle pour divers types d'appareils, selon qu'ils sont tripolaires ou tétrapolaires. Il en résulte que ces châssis sont habituellement spécifiques aux types d'appareils, ce qui crée des complications pour la fabrication et le stockage.

Le document US-A-3.343.042 décrit un châssis débrochable dans lequel le support du disjoncteur comporte deux flasques mobiles agencés pour être rapportés à deux parois latérales opposées du disjoncteur par des moyens de fixation, chaque flasque mobile étant pourvu de moyens de guidage coopérant avec les flasques fixes correspondants pour assurer le déplacement du disjoncteur de l'une vers l'autre desdites première ou seconde positions. Les moyens de guidage comportent des galets guidés dans deux encoches rectilignes des flasques fixes.

Le document DE-A-3117495 se rapporte à un disjoncteur débrochable par l'intermédiaire de deux axes déplaçables dans deux encoches en formes d'équerres. Le déplacement du disjoncteur dans le sens du débrochage ou de l'embrochage s'effectue au moyen d'un mécanisme à vis, entraîné par la rotation d'une manivelle, et placé sous le disjoncteur.

L'objet de l'invention consiste à réaliser un châssis de débrochage adaptable à un disjoncteur indépendamment de son mode de montage horizontal ou vertical.

Le châssis de débrochage selon l'invention est caractérisé en ce que:
- lesdits axes portent chacun une bague de roulement folle et deux goupilles fixes disposées de part et d'autre de ladite bague de roulement,
- chaque flasque fixe est équipé d'un levier de manoeuvre pourvu d'une poignée et pivotant autour d'un axe fixe, ledit levier de manoeuvre comportant un évidement dont les bords constituent deux rampes de guidage pour l'axe d'entraînement engagé dans ledit évidement,
- et un dispositif de verrouillage est agencé sur le levier de manoeuvre pour le bloquer dans une position correspondant à l'une ou l'autre desdites première et seconde positions du disjoncteur.

La présente invention sera mieux comprise en référence à la description d'exemples de réalisation préférés et aux dessins annexés dans lesquels :
la figure 1 est une vue en perspective du châssis de débrochage selon l'invention, représenté en position embrochée,
la figure 2 est une vue de dessus illustrant le châssis de débrochage selon la figure 1,
la figure 3 est une vue en perspective du châssis de débrochage selon l'invention représenté en position débrochée,
la figure 4 est une vue de dessus illustrant le châssis de débrochage selon la figure 3,
la figure 5 est une vue en perspective du châssis de débrochage lorsque le disjoncteur est extrait du socle de raccordement,
la figure 6 est une vue de dessus représentant le châssis de débrochage selon la figure 5,
la figure 7 est une vue en perspective d'un des deux flasques fixes,
la figure 8 est une vue en perspective représentant le socle de raccordement équipé de ses flasques fixes,
les figures 9 et 10 représentent deux vues en coupe du dispositif de verrouillage, respectivement dans son état de verrouillage du levier de manoeuvre et dans son état déverrouillé, et
la figure 11 représente une vue en perspective illustrant la face extérieure d'un des deux flasques mobiles.

En référence aux figures, le châssis de débrochage 10, sur lequel est monté un disjoncteur 11, se compose principalement de deux flasques fixes 12 et 13 fixés parallèlement sur deux côtés d'un socle de raccordement 14, appelé socle débrochable, pourvu de tulipes de raccordement 15 destinées à recevoir des broches 16 du disjoncteur 11. Le disjoncteur est porté par un support constitué de deux flasques mobiles 17 et 18, fixés sur deux parois latérales opposées de ce disjoncteur au moyen de griffes 17a, 17b et de vis 18a et 18b. Ce mode de fixation est particulièrement avantageux parce qu'il rend la liaison flasque mobile-disjoncteur quasiment universelle de sorte que n'importe quel type de disjoncteur peut être monté sur ces flasques. Cette liaison est rendue indépendante du nombre de pôles du disjoncteur, du mode de commande de l'appareil qui peut être électrique, rotative, basculante, prolongée etc., et de la présence éventuelle d'un bloc associé, par exemple un bloc différentiel, ou un bloc de mesure de l'intensité. En outre, ce mode de fixation laisse l'accès libre au plastron du disjoncteur, ce qui permet l'adaptation d'auxiliaires tels que des contacts de position, une bobine à manque de tension, une bobine à émission de courant, sans pour autant nécessiter un démontage du châssis.

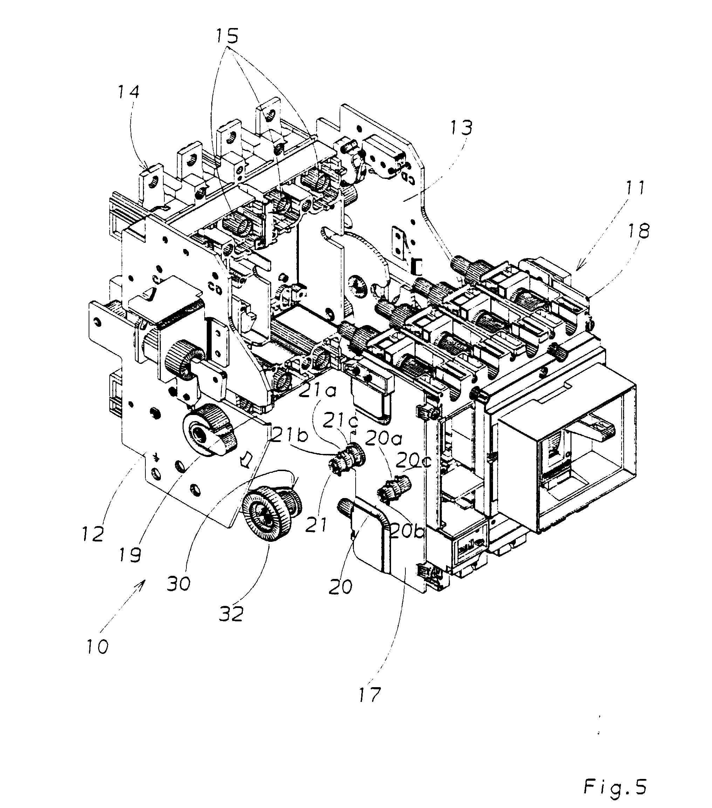

Chaque flasque fixe 12, 13 comporte une gorge de guidage 19 dans laquelle est engagé un axe d'entraînement respectivement 20 et 21 solidaire d'un flasque mobile 17 respectivement 18. De cette manière, les flasques mobiles, et par conséquent le disjoncteur auquel ces flasques sont fixés, peuvent se déplacer en translation selon un axe perpendiculaire au socle de raccordement entre une première position dans laquelle le disjoncteur est embroché sur ledit socle de raccordement et une seconde position dans laquelle il est débroché de ce socle. A cet effet, chaque axe d'entraînement porte une bague de roulement respectivement 20a et 21a qui est folle, c'est-à-dire en roulement libre sur cet axe fixe, la position de cette bague étant définie par deux goupilles respectivement 20b, 20c et 21b, 21c, disposées de part et d'autre de chacune desdites bagues 20a et 21a. (voir fig. 5). La présence de goupilles permet d'utiliser le châssis indifféremment en position horizontale ou verticale.

Il est bien entendu que ces moyens de guidage pourraient être conçus différemment, par exemple sous la forme de glissières composées d'un coulisseau solidaire des flasques mobiles et engagé dans une gorge ou une rainure appropriée ménagée le long de la paroi des flasques fixes.

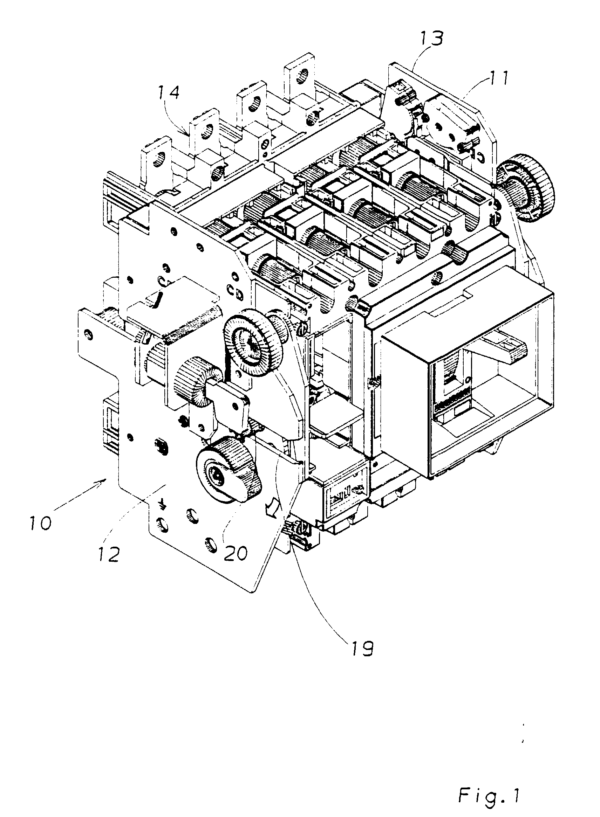

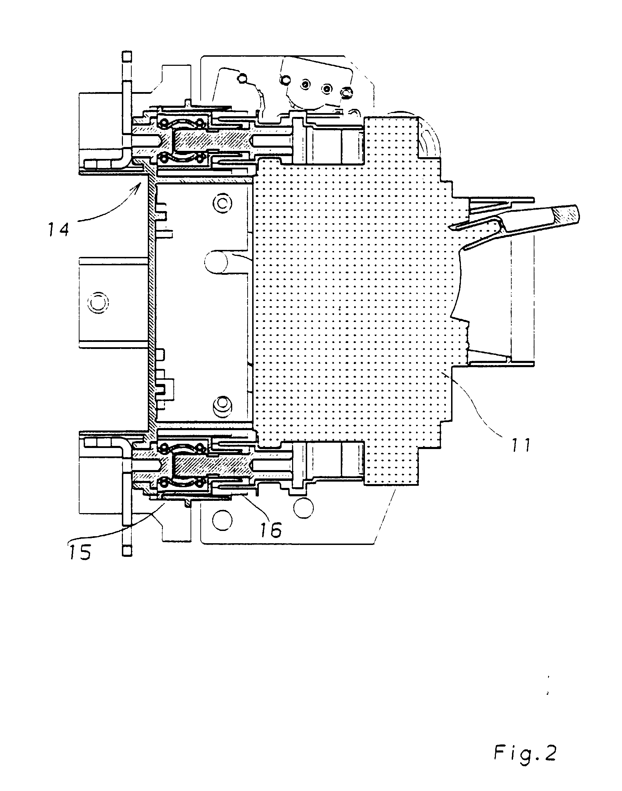

Les figures 1 et 2 montrent le disjoncteur en position embrochée. Les axes d'entraînement 20 et 21 (dont seul le premier est visible dans la figure) se situent sensiblement à proximité du fond desdites gorges de guidage 19.

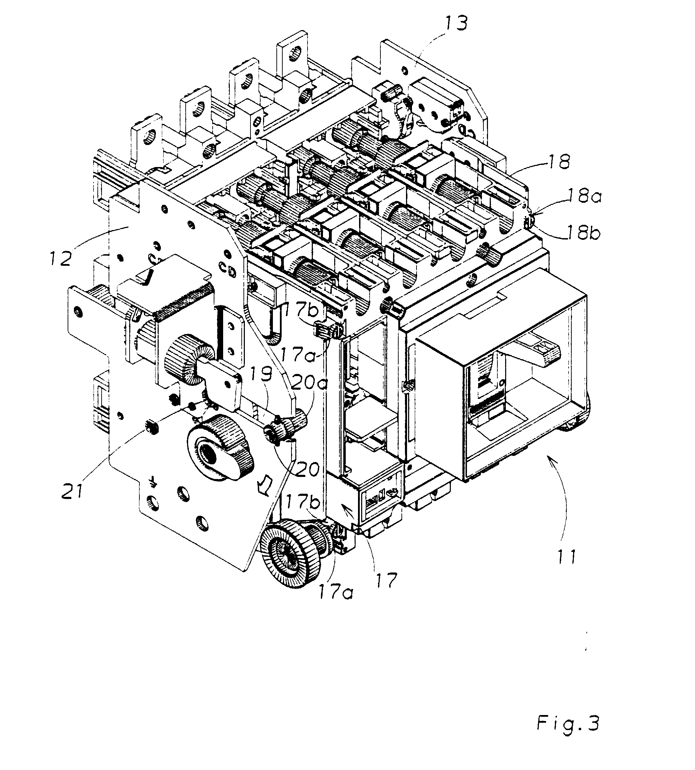

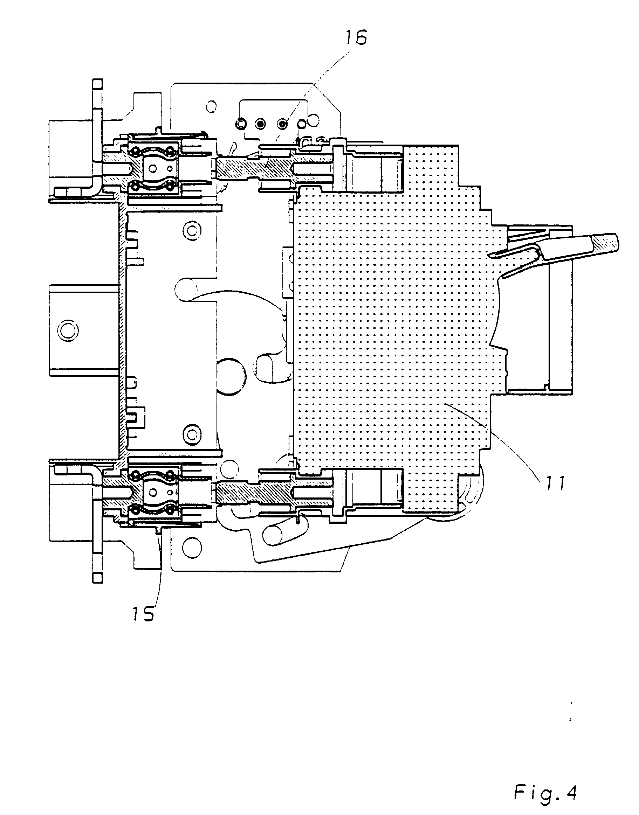

Les figures 3 et 4 illustrent le disjoncteur dans sa position débrochée. Les axes d'entraînement 20 et 21, et plus exactement le premier 20 de ces axes d'entraînement, sont disposés au voisinage de l'embouchure de la gorge de guidage 19 correspondante.

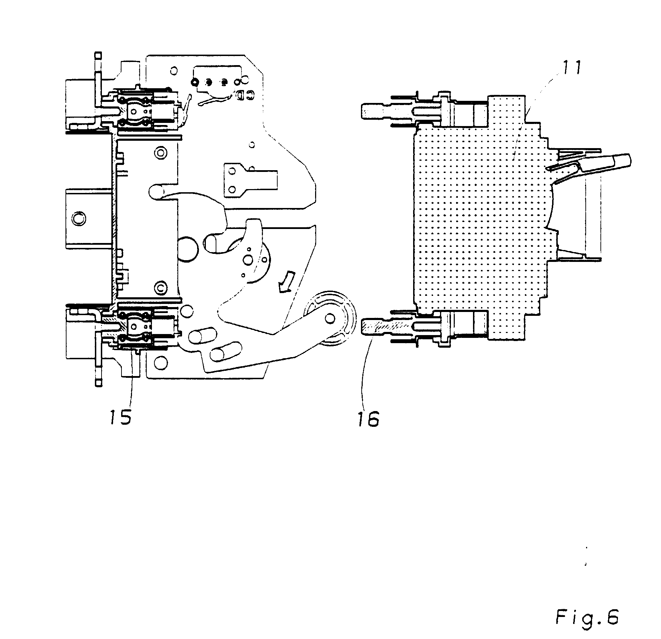

Les figures 5 et 6 illustrent le disjoncteur dans une position dans laquelle il n'est plus seulement débroché du socle de raccordement mais complètement extrait, ce qui permet un accès aux tulipes de raccordement 15. Dans cette position, les axes d'entraînement 20 et 21 sont entièrement dégagés des gorges de guidage 19.

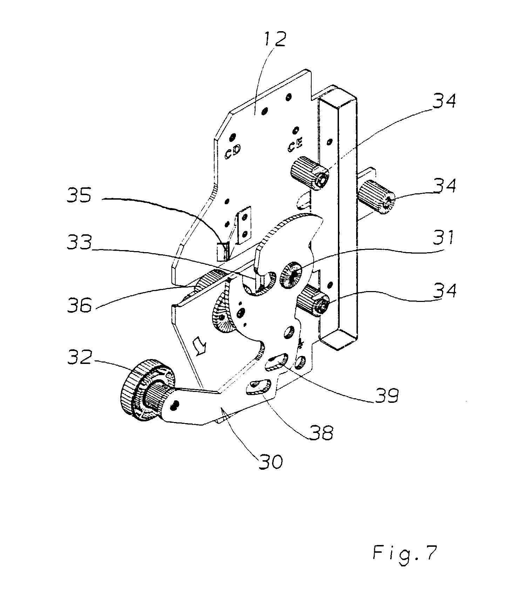

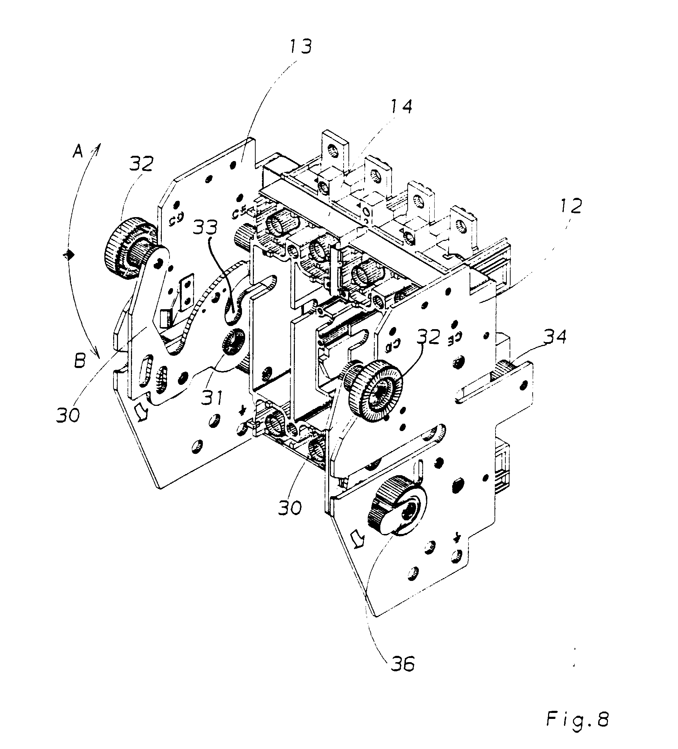

Les trois états précédents peuvent être atteints grâce à l'existence de leviers de manoeuvre 30, articulés sur les flasques fixes et représentés plus en détail par les figures 7 et 8.

En référence à ces figures 7 et 8 , chaque flasque fixe 12 et 13 est équipé d'un levier de manoeuvre 30 articulé sur un axe fixe 31 et pourvu d'une poignée 32. Il comporte par ailleurs un évidement 33 dans lequel est engagé l'axe d'entraînement 21 dont les bords constituent deux rampes de guidage agencées pour assurer le déplacement en translation des flasques mobiles, sous l'effet du pivotement du levier de manoeuvre 30 dans un sens ou dans l'autre autour de son axe 31. Lorsque l'opérateur soulève le levier de manoeuvre 30 dans la direction indiquée par la flèche A, l'axe d'entraînement 21 (voir figure 3) est poussé par la rampe formée par le bord supérieur de l'évidement 33, ce qui a pour effet de déplacer le flasque mobile vers sa première position dans laquelle le disjoncteur est embroché. Lorsque l'opérateur abaisse le levier de manoeuvre 30 dans la position indiquée par la flèche B, l'axe d'entraînement 21 est poussé par la rampe formée par le bord inférieur de l'évidement 33, ce qui a pour effet de déplacer le flasque mobile vers sa seconde position, dans laquelle le disjoncteur est débroché. Les bords supérieurs et inférieurs de l'évidement constituent des cames qui assurent le déplacement de l'axe d'entraînement 21.

Les flasques fixes sont montés sur le socle de raccordement 14 au moyen d'entretoises 34 adaptables en fonction du type de disjoncteur correspondant audit socle de raccordement. Les entretoises 34, qui sont au nombre de trois par flasque fixe, sont disposées selon les sommets d'un triangle pour permettre une liaison stable des flasques fixes et du socle de raccordement. Un frotteur 35 est fixé sur la face intérieure des flasques fixes pour assurer la mise à la masse de l'ensemble. Le cas échéant, des contacts de position ainsi qu'un dispositif de verrouillage 36 peuvent être prévus.

La poignée de manoeuvre 32 du levier de manoeuvre 30 est protubérante sur les côtés extérieurs des flasques fixes et permet de le faire basculer autour de son axe 31.

Des lumières 38, 39 sont ménagées dans le levier de manoeuvre 30 pour permettre le cadenassage de ce levier dans une position déterminée.

Afin d'éviter que le levier de manoeuvre se déplace sous l'effet de la gravité autour de l'axe 31, cet axe est épaulé, c'est-à-dire qu'une rondelle élastique est interposée entre le flasque et le levier de manoeuvre correspondant.

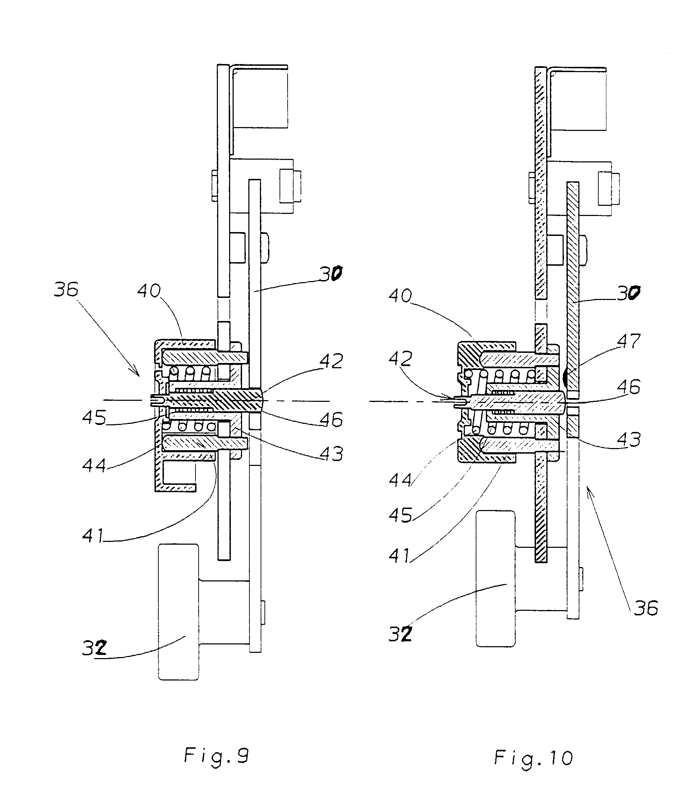

Le dispositif de verrouillage 36 est représenté vu en coupe par les figures 9 et 10 respectivement à l'état verrouillé et à l'état déverrouillé. Il se compose d'un corps 40 pourvu d'une rampe hélicoïdale, de deux aiguilles 41, d'un axe de verrouillage 42, d'un canon de guidage 43, d'un ressort de rappel 44 qui travaille en compression-torsion, d'un ressort de verrouillage 45 qui travaille en compression et fonctionne de la manière suivante. Lorsque l'opérateur fait tourner le corps 40, l'axe de verrouillage 42 se déplace axialement grâce à la rampe hélicoïdale dudit corps, ce qui permet de libérer le levier de manoeuvre 30, étant donné que l'extrémité de l'axe de verrouillage se retire d'une ouverture 46 ménagée dans ledit levier de manoeuvre.

Le dispositif est maintenu dans la position déverrouillée grâce à l'insertion d'au moins une des aiguilles dans une cuvette ménagée au haut de la rampe hélicoïdale. Le levier de manoeuvre peut ainsi être manipulé de façon libre.

Lorsque l'opérateur manipule le levier de manoeuvre, une protubérance 47 disposée sur une force de ce levier interfère avec l'extrémité de l'axe de verrouillage 42, ce qui a pour effet de déplacer axialement le corps 40. De ce fait, une des aiguilles 41 sort de sa cuvette et le corps est appelé dans sa position verrouillée par le ressort de rappel 44. Le verrouillage deviendra effectif dès que la position du levier de manoeuvre est telle que l'ouverture 46 correspond à l'extrémité de l'axe de verrouillage qui s'y engage comme le montre la figure 9.

Ce dispositif permet d'éviter des manoeuvres intempestives du levier de manoeuvre et/ou l'extraction involontaire du disjoncteur du socle de raccordement, ce qui aurait pour effet de déconnecter les broches du disjoncteur des tulipes du socle. Le cadenassage est possible dans les différentes positions.

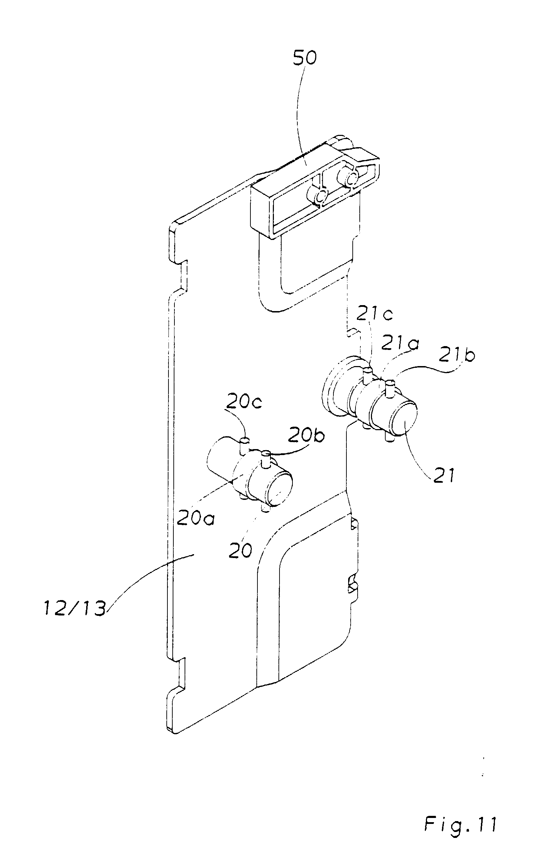

La figure 11 est une vue en perspective des flasques mobiles 12 ou 13 portant les axes d'entraînement 20 et 21. Ils comportent en outre un détrompeur 50 qui garantit la correspondance des différents composants entre eux.

Ce châssis débrochable présente encore d'autres avantages. Par exemple, lors de la mise en place de la partie mobile sur la partie fixe, la poussée exercée par l'opérateur sur le disjoncteur fait tourner les leviers de manoeuvre jusqu'à leur position de verrouillage, ce qui interdit la chute accidentelle d'un appareil.

Les poignées de manoeuvre sont fixées aux leviers de manoeuvre correspondants de telle manière que dans chacune des positions stables, elles ne dépassent pas en hauteur le disjoncteur. De cette manière, le tableau dans lequel est monté ce disjoncteur peut être refermé. En outre, le fait d'associer les flasques fixes et les leviers de manoeuvre rend ces derniers imperdables et indépendants du nombre de pôles du disjoncteur.

Enfin, des microcontacts de fin de course peuvent être montés sur les flasques fixes pour fournir des signaux correspondant à la position du levier de manoeuvre lorsque le disjoncteur est embroché ou débroché.

## Revendications

1. Châssis de débrochage pour un disjoncteur, lequel est agencé pour être maintenu dans une première position dans laquelle il est embroché sur un socle de raccordement ou dans une seconde position dans laquelle il est débroché de ce socle, ledit châssis comportant deux flasques fixes solidaires du socle de raccordement, et un support portant le disjoncteur et agencé pour coopérer avec lesdits flasques fixes pour maintenir le disjoncteur dans la première ou la seconde position, ledit support comportant deux flasques mobiles (17, 18) agencés pour être rapportés à deux parois latérales opposées du disjoncteur par des moyens de fixation, chaque flasque mobile étant pourvu de moyens de guidage coopérant avec les flasques fixes correspondants (12, 13) pour assurer le déplacement du disjoncteur (11) de l'une vers l'autre desdites première ou seconde positions, lesdits moyens de guidage comportant au moins deux axes d'entraînement (20, 21) solidaires des flasques mobiles (17, 18), et respectivement engagés dans deux gorges de guidage (19) ménagées dans les deux flasques fixes (12, 13),
caractérisé en ce que
- lesdits axes (20, 21) portent chacun une bague de roulement folle (20a, 21a) et deux goupilles fixes (20b, 20c; 21b, 21c) disposées de part et d'autre de ladite bague de roulement,
- chaque flasque fixe (12, 13) est équipé d'un levier de manoeuvre (30) pourvu d'une poignée (32) et pivotant autour d'un axe fixe (31), ledit levier de manoeuvre (30) comportant un évidement (33) dont les bords constituent deux rampes de guidage pour l'axe d'entraînement (21) engagé dans ledit évidement,
- et un dispositif de verrouillage (36) est agencé sur le levier de manoeuvre (30) pour le bloquer dans une position correspondant à l'une ou l'autre desdites première et seconde positions du disjoncteur.

2. Châssis selon la revendication 1, caractérisé en ce que les flasques fixes (12, 13) sont fixés au socle de raccordement (14) par l'intermédiaire d'entretoises (34) adaptables au type de disjoncteur (11).

3. Châssis selon la revendication 1, caractérisé en ce que le dispositif de verrouillage (36) comporte un corps (40) pourvu d'une rampe hélicoïdale, deux aiguilles (41), un axe de verrouillage (42) dont une extrémité est agencée pour s'engager dans des ouvertures ménagées dans le levier de manoeuvre (30), un canon de guidage (43), un ressort de rappel (44) travaillant en compression-torsion et un ressort de verrouillage (45) travaillant en compression.

4. Châssis selon la revendication 1, caractérisé en ce que au moins un desdits flasques mobiles (17, 18) est équipé d'un détrompeur (50).

5. Châssis selon la revendication 1, caractérisé en ce que au moins un desdits flasques fixes (12, 13) est équipé d'un frotteur (35) de mise à la masse.

6. Châssis selon la revendication 1, caractérisé en ce que l'un au moins desdits leviers de manoeuvre (30) est équipé de lumières (38, 39) agencées pour permettre le cadenassage de ce levier dans une position prédéterminée.

7. Châssis selon la revendication 1, caractérisé en ce que les flasques fixes (11, 12) portent des microcontacts de fin de course du levier de manoeuvre (30) correspondant.

## Patentansprüche

1. Einschubchassis für einen Leistungsschalter, der so ausgelegt ist, daß er in einer ersten Stellung, in der er auf einen Anschlußsockel aufgesteckt ist, oder in einer zweiten Stellung, in der er von diesem Sockel getrennt ist, gehalten werden kann, wobei das genannte Chassis zwei, am Anschlußsockel befestigte feststehende Seitenteile sowie einen, den Leistungsschalter aufnehmenden Träger umfaßt, der dazu dient, mit den genannten feststehenden Seitenteilen zusammenzuwirken, um den Leistungsschalter in der ersten bzw. zweiten Stellung zu halten, der genannte Träger zwei bewegliche Seitenteile (17, 18) umfaßt, die dazu dienen, mit Hilfe von Befestigungsmitteln an zwei gegenüberliegende Seitenwände des Leistungsschalters angebaut zu werden, jedes bewegliche Seitenteil Führungsmittel aufweist, die mit den zugeordneten feststehenden Seitenteilen (12, 13) zusammenwirken, um das Verschieben des Leistungsschalters (11) von der genannten ersten in die genannte zweite Stellung und umgekehrt zu gewährleisten, und die genannten Führungsmittel mindestens zwei Führungszapfen (20, 21) umfassen, die an den beweglichen Seitenteilen (17, 18) befestigt sind und in zwei, in den beiden feststehenden Seitenteilen (12, 13) ausgebildete Führungsschlitze (19) eingreifen,
dadurch gekennzeichnet, daß
- auf jedem der genannten Zapfen (20, 21) ein frei drehbarer Laufring (20a, 21a) sowie zwei, auf beiden Seiten des genannten Laufrings angeordnete feststehende Stifte (20b, 20c; 21b, 21c) angeordnet sind,
- jedes feststehende Seitenteil (12, 13) einen Betätigungshebel (30) umfaßt, der mit einem Griff (32) versehen ist und um eine ortsfeste Achse (31) verschwenkt wird, wobei der genannte Betätigungshebel (30) eine Aussparung (33) aufweist, deren Ränder zwei Führungsschrägen für den in diese Aussparung eingreifenden Zapfen (21) bilden, und
- eine Verriegelungsvorrichtung (36) am Betätigungshebel (30) ausgebildet ist, um diesen in einer Stellung zu blockieren, die der genannten ersten Stellung bzw. der genannten zweiten Stellung des Leistungsschalters entspricht.

2. Chassis nach Anspruch 1, dadurch gekennzeichnet, daß die feststehenden Seitenteile (12, 13) am Anschlußsockel (14) mit Hilfe von Abstandshaltern (34) befestigt sind, die je nach Typ des Leistungsschalters (11) unterschiedlich ausgeführt sein können.

3. Chassis nach Anspruch 1, dadurch gekennzeichnet, daß die Verriegelungsvorrichtung (36) ein Gehäuse (40) mit einer Wendelschräge, zwei Nadelstifte (41), einen Verriegelungszapfen (42), dessen eines Ende dazu dient, in im Betätigungshebel (30) ausgebildete Öffnungen einzugreifen, eine Führungsbuchse (43), eine als Druck- und Torsionsfeder arbeitende Rückholfeder (44) sowie eine als Druckfeder arbeitende Verriegelungsfeder (45) umfaßt.

4. Chassis nach Anspruch 1, dadurch gekennzeichnet, daß mindestens eines der genannten beweglichen Seitenteile (17, 18) mit einem Verwechslungsschutz (50) versehen ist.

5. Chassis nach Anspruch 1, dadurch gekennzeichnet, daß mindestens eines der feststehenden Seitenteile (12, 13) einen Schleifkontakt (35) für die Masseverbindung aufweist.

6. Chassis nach Anspruch 1, dadurch gekennzeichnet, daß in mindestens einem der genannten Betätigungshebel (30) Ausnehmungen (38, 39) ausgebildet sind, um eine Verriegelung dieses Hebels in einer bestimmten Stellung mit Hilfe von Vorhängeschlössern zu ermöglichen.

7. Chassis nach Anspruch 1, dadurch gekennzeichnet, daß an den feststehenden Seitenteilen (12, 13) Mikroschalter zur Erfassung der Endlage des zugeordneten Betätigungshebels (30) angebracht sind.

## Claims

1. A draw-out rack for a circuit breaker, which is arranged to be held in a first position in which it is drawn-in on a connecting base or in a second position in which it is drawn-out from this base, said rack comprising two fixed flanges securedly united to the connecting base, and a support supporting the circuit breaker and arranged to cooperate with said fixed flanges to keep the circuit breaker in the first or second position, said support comprising two mobile flanges (17, 18) arranged to be affixed to two opposite side walls of the circuit breaker by fixing means, each mobile flange being provided with guide means cooperating with the corresponding fixed flanges (12, 13) to achieve movement of the circuit breaker (11) from one to the other of said first or second position, said guide means comprising at least two drive spindles (20, 21) securedly united to the mobile flanges (17, 18) and respectively engaged in two guide grooves (19) arranged in the two fixed flanges (12, 13),
characterized in that
- said spindles (20, 21) both bear a bearing ring (20a, 21a) fitted loose and two fixed pins (20b, 20c; 21b, 21c) fitted on each side of said bearing ring,
- each fixed flange (12, 13) is equipped with an operating lever (30) provided with a handle (32) and pivoting around a fixed spindle (31), said operating lever (30) comprising a recess (33) whose edges form two guide ramps for the drive spindle (21) engaged in said recess,
- and a locking device (36) is arranged on the operating lever (30) to block it in a position corresponding to one or the other of said first and second positions of the circuit breaker.

2. The rack according to claim 1, characterized in that the fixed flanges (12, 13) are secured to the connecting base (14) by means of spacers (34) adaptable to the type of circuit breaker (11).

3. The rack according to claim 1, characterized in that the locking device (36) comprises a body (40) equipped with a spiral ramp, two pins (41), a locking spindle (42) one end of which is arranged to engage in openings arranged in the operating lever (30), a guide barrel (43), a return spring (44) working in compression-torsion and a locking spring (45) working in compression.

4. The rack according to claim 1, characterized in that at least one of said mobile flanges (17, 18) is equipped with an error prevention device (50).

5. The rack according to claim 1, characterized in that at least one of said fixed flanges (12, 13) is equipped with a sliding earthing contact (35).

6. The rack according to claim 1, characterized in that at least one of said operating levers (30) is equipped with apertures (38, 39) arranged to enable padlocking of this lever in a predetermined position.

7. The rack according to claim 1, characterized in that the fixed flanges (12, 13) are equipped with microcontacts for indication of end of travel of the corresponding operating lever (30).
